# EUROPEAN PATENT APPLICATION

(11) **EP 3 318 428 A1**
(43) Date of publication of application: **09.05.2018**
(21) Application number: 16197647.7
(22) Date of filing: 08.11.2016
(51) Int. Cl.: B60C 23/12

(54) **ON-WHEEL AIR MAINTENANCE SYSTEM**

(71) Applicant: The Goodyear Tire & Rubber Company, Akron, Ohio 44316 (US)
(72) Inventor: GAU, Jin Shy Steve, Hudson, Ohio 44236 (US); LIN, Cheng-Hsiung, Hudson, Ohio 44236 (US)
(74) Representative: Kutsch, Bernd

(57) **Abstract**

An air maintenance system and method for maintaining optimal air pressure in a rotating pneumatic tire is disclosed. The method comprises the steps of securing an axially inner ring (31, 32) to a vehicle wheel or rim (22); rotating the vehicle wheel or rim (22); maintaining an axially outer ring (81, 82) at a constant angular position relative to a ground surface by means of a stationary mass (84); and preferably linearly reciprocating a piston (41) relative to a cylinder (42) secured to the vehicle wheel or rim (22) by means of a cam groove (88) on an outer surface of the axially outer ring (81, 82). The system has a rotatable axially inner ring (31, 32) secured to a vehicle wheel or rim (22); a stationary axially outer ring (81, 82) maintaining a constant angular position relative to a ground surface; a stationary mass (84) secured the stationary axially outer ring (81, 82); a cylinder (42) secured to the rotatable axially inner ring (31, 32); and a piston (41) secured to the cylinder (42) for a preferably linear motion relative to the cylinder (42) and the rotatable axially inner ring (31, 32).

## Description

### Technical Field

The present invention relates generally to the automotive field, and more specifically, to a new and useful tire air maintenance system.

### Background of the Present Invention

Non-optimally pressurized pneumatic tires contribute to low fuel efficiency. These effects are particularly felt in the trucking industry, where long distances and large loads amplify the effects of an underinflated tire. However, it is often inconvenient and inefficient for truck drivers to constantly stop, check, and inflate the vehicle tires to the optimal pressure, leading to the persistence of less-than-optimal fuel efficiency in truck fleets. This challenge has led to several conventional auto-inflating tire systems. Conventional auto-inflating tire systems may be either central or distributed, but each suffers from its own set of drawbacks. Central inflation systems are complex and expensive, and require significant work for aftermarket installation (drilling through axles, tapping existing air lines, etc.). Distributed systems are mounted at each wheel and can be less expensive, but the potential for reduced cost is typically at the expense of the continuous replacement of the device (which fails due to the harsh wheel environment). Thus, there is a need in the automotive field to create a new and useful air maintenance system for pneumatic tires.

### Summary of the Invention

The invention relates to an air maintenance system in accordance with claim 1 and to a method in accordance with claim 14.

Dependent claims refer to preferred embodiments of the invention.

An air maintenance system in accordance with a preferred aspect of the present invention includes a rotating inner ring secured to a vehicle wheel, a stationary outer ring maintaining a constant angular position relative to a ground surface, a stationary mass secured to the stationary outer ring, a cylinder secured to the rotating inner ring, and a piston secured to the cylinder for linear motion relative to the cylinder and the rotating inner ring. The piston reciprocates axially back and forth as determined by a cam groove on an outer surface of the stationary outer ring operatively engaging one end of the piston such that the piston and cylinder pump air into a tire cavity of a pneumatic tire mounted to the vehicle wheel.

According to another preferred aspect of the system, a bearing assembly has a track of bearings the rotating inner ring to rotate concentrically relative to the stationary outer ring.

According to still another preferred aspect of the system, the rotating inner ring rotates relative to the stationary mass.

According to yet another preferred aspect of the system, relative diameters between the rotating inner ring and the stationary outer ring collaborate to achieve a desired gear ratio and pumping speed.

According to still another preferred aspect of the system, the rotating inner ring provides a smooth bearing surface for the bearings.

According to yet another preferred aspect of the system, the stationary outer ring encircles the air maintenance system and applies an inward radial force against the bearings when assembled.

According to still another preferred aspect of the system, the inward radial force maintains the rotating inner ring and the bearings.

According to yet another preferred aspect of the system, the rotating inner ring has a substantially homogeneous weight distribution such that no portion of the rotating inner ring is substantially heavier than another portion.

According to still another preferred aspect of the system, the rotating inner ring is substantially rigid and made of metal.

According to yet another preferred aspect of the system, the rotating inner ring is made of a rigid polymer.

According to still another preferred aspect of the system, the stationary mass overcomes inertia and friction generated by rotation of the rotating inner ring and rotating vehicle wheel such that the stationary mass stays substantially static while the rotating inner ring rotates.

According to yet another preferred aspect of the system, the stationary mass maintains the angular position of the stationary mass relative to the ground surface as the vehicle wheel rotates and provides torque, generated by gravity, that opposes the rotation of the rotating inner ring with the vehicle wheel.

According to still another preferred aspect of the system, the stationary mass prevents the stationary outer ring from rotating with the vehicle wheel and the rotating inner ring.

According to yet another preferred aspect of the system, the stationary mass is rectangular.

According to still another preferred aspect of the system, the stationary mass is spherical.

According to yet another preferred aspect of the system, the bearings retain non-slip contact between the bearings and the rotating inner ring.

According to still another preferred aspect of the system, the rotating inner ring includes two semicircular inner ring portions secured to each other.

According to yet another preferred aspect of the system, the stationary outer ring includes two semicircular outer ring portions secured to each other.

A method in accordance with a preferred aspect of the present invention maintains optimal air pressure in a rotating pneumatic tire. The method includes the steps of: securing an inner ring to a vehicle wheel; rotating the vehicle wheel; maintaining an outer ring at a constant angular position relative to a ground surface by means of a stationary mass; and linearly reciprocating a piston relative to a cylinder secured to the vehicle wheel by means of a cam groove on an outer surface of the outer ring.

According to a preferred aspect of the method, another step concentrically rotates the inner ring relative to the outer ring by means of a ring shaped bearing assembly.

### Definitions

"Axial" and "axially" means lines or directions that are parallel to the axis of rotation of the tire.

"Normal inflation pressure" refers to the specific design inflation pressure and load assigned by the appropriate standards organization for the service condition for the tire.

"Normal load" refers to the specific design inflation pressure and load assigned by the appropriate standards organization for the service condition for the tire.

"Pneumatic tire" means a mechanical device of generally toroidal shape (usually an open torus) having beads and a tread and made of rubber, chemicals, fabric and steel or other materials. When mounted on the wheel of a motor vehicle, the tire, through its tread, provides a traction and contains the fluid or gaseous matter, usually air, that sustains the vehicle load.

"Radial" and "radially" means directions radially toward or away from the axis of rotation of the tire.

### Brief Description of Drawings

The present invention will be described by way of example and with reference to the accompanying drawings, in which:
Fig. 1 schematically illustrates a perspective view of part of an air maintenance assembly in accordance with the present invention.
Fig. 2 schematically illustrates a cross section view of part of the assembly of Fig. 1.
Fig. 3 schematically illustrates a cross section view of part of the assembly of Fig. 2.

### Detailed Description of Example Embodiments of the Present Invention

A conventional tire inflation system sometimes mounts to the wheel of a vehicle. Such tire inflation system may include a pumping ring that rotates with the wheel and a positioning system rotatably coupled to the wheel. The positioning system may include a positioning mechanism and an eccentric mass. A planetary roller may be disposed in non-slip contact with the pumping ring and the positioning system. A flexible diaphragm may define a pump cavity wherein relative motion between the pumping ring and positioning system may be translated by the planetary roller into an occluding force that deforms the diaphragm and thereby occludes the pump cavity. Relative motion between the pumping ring and the positioning system may be achieved by coupling the eccentric mass to the positioning mechanism to offset the center of mass of the positioning system from the center of rotation of the positioning system. Such a system is described in US-B-8,763,661, incorporated herein by reference in its entirety.

Another example air maintenance system may include a rotating inner ring, a stationary outer ring, an eccentric mass, an occlusion roller located proximate to the eccentric mass, and a flexible tube that defines a pump cavity. The air maintenance system may be coupled to a rotating wheel wherein the rotating inner ring rotates with the rotating wheel while the eccentric mass maintains a constant angular position relative to the rotating wheel. This arrangement may thereby generate relative motion between the rotating inner ring and the eccentric mass. The air maintenance system may translate this relative motion into mechanical work or other energy forms. The air maintenance system may pump a fluid from the ambient environment into a pneumatic tire seat to the rotating wheel by applying an occluding force against the flexible tube, periodically occluding portions of the pump cavity. The air maintenance system may be coupled to the rim of the wheel, such as that of a truck, compact vehicle, motorcycle, bicycle and/or other vehicle. Such an example system is described in US-A-2016/0167465, incorporated herein by reference in its entirety.

The air maintenance system may be a planetary system wherein the relative diameters between the inner rotating ring and roller elements collaborate to achieve the desired gear ratio and pumping speed. The pumping rate, pressure, and frequency may also be controlled with a passive or an active control mechanism.

The inner rotating ring may apply an occluding force against the flexible tube. The inner rotating ring also may provide a smooth bearing surface for the roller elements and an occlusion roller, and may additionally contain or constrain other components of the air maintenance system. The inner rotating ring may rotate with the rotating wheel, and may be statically, but removably, coupled to the rotating wheel.

An outer ring may encircle the air maintenance system and apply an inward radial force against the rollers when assembled. This inward radial force may maintain the inner rotating ring and the rollers. The inner rotating ring may have a substantially homogeneous weight distribution such that no portion of the inner rotating ring is substantially heavier than another portion. The inner rotating ring may be substantially rigid and made of metal (e.g. stainless steel, aluminum, titanium), but may alternately be made of a rigid polymer (e.g. polyacetylenes, polyfluroenes, nylon, and polyimides) or a ceramic.

The eccentric mass may overcome the inertia and friction generated by the rotation of the inner rotating ring and rotating wheel such that the eccentric mass stays substantially static while the inner rotating ring rotates. Further, the eccentric mass may be coupled to the air maintenance system to maintain the angular position of the eccentric mass relative to the road surface (which is contacted by the wheel) as the wheel rotates and provides torque, generated by gravity, that opposes the rotation of the inner rotating ring with the wheel. In other words, the eccentric mass may prevent the outer ring from rotating with the wheel and the inner rotating ring. This relative motion, enabled by the gravitational pull on the eccentric mass may be harvested to do mechanical work.

This relative motion may occur because the center of mass of the eccentric mass is not located at the center of rotation such that the pull of gravity on the eccentric mass may allow it to remain substantially static relative to the road surface while the inner rotating ring rotates relative to the road surface. The weight of the eccentric mass may be large enough to generate the amount of mechanical work desired, in addition to being large enough to overcome friction and adequately dampen induced oscillations resulting from non-rotating motion (e.g. from bumps). The eccentric mass may be rectangular, spherical, or amorphous. The eccentric mass may be made of metal, such as stainless steel, copper, aluminum, etc., but may alternately be made of plastic, ceramic, and/or a fluid/gel. The roller elements may additionally retain non-slip contact between the roller elements and the inner rotating ring, but may not provide a direct occluding force. The air maintenance system may include two, three, five, or any suitable number of rollers.

The flexible tube may define the pump cavity that holds a fluid and a deformable interface that occludes the pump cavity. The flexible tube may have a circular or oval cross section. The flexible tube may comprise a flexible, elastomeric material such as rubber or thermosets, thermoplastics, or any other suitable material. The flexible tube may include an inlet port and an outlet port each in fluid connection with tubes and a pressure regulator assembly.

The pressure regulator assembly may include a control valve, check valves, a filter, and an inlet port for receiving ambient air. A housing of the pressure regulator assembly may be secured to the wheel with the inlet port located externally to the tire cavity of the tire and the remaining structures of the pressure regulator assembly located internally to the tire cavity.

The air maintenance system may utilize a peristaltic or reciprocating pump method. In the peristaltic method, the occlusion roller may constrict a portion the flexible tube that is adjacent the occlusion roller thereby deforming the flexible tube segment by segment between an expanded condition and an at least partially collapsed condition in response to respective segment by segment deformation by the occlusion roller located, with the eccentric mass, by gravity statically at the bottom of the outer ring.

The rotating inner ring may be disposed concentrically within the stationary outer ring with the roller elements determining its orientation relative to the stationary outer ring. The roller elements may be rotatably secured to the stationary outer ring by a shaft. The stationary outer ring may comprise a plurality of segments (e.g., 3, 4, 5, etc.) having a female mating connection at one end and a male connection at its opposite end. The rotating inner ring may comprise a roller element track for receiving the roller elements, a plurality of segments (e.g., 1, 2, 3, 4, etc.) with a female recess at one end for mating with a male clip connection at its opposite end. Each end may further have slots for securing the flexible tube. The rotating inner ring may be secured to wheel by connecting the ends. The occlusion roller may be rotatably attached to the stationary outer ring by a shaft such that the occlusion roller, held stationary by the eccentric mass, rolls and squeezes the flexible tube as the rotating inner ring and wheel rotate. The roller elements may travel along the roller element track and the occlusion roller may sequentially squeeze the flexible tube as the wheel rotates. The housing of the pressure regulator assembly may include a fill port for regular tire pressure maintenance (e.g., an initial air fill up, etc.).

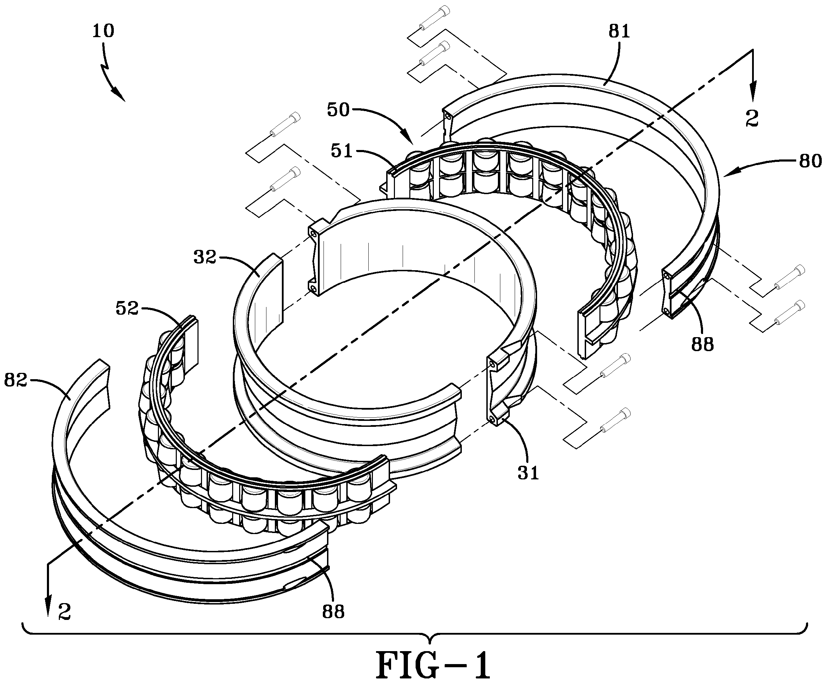

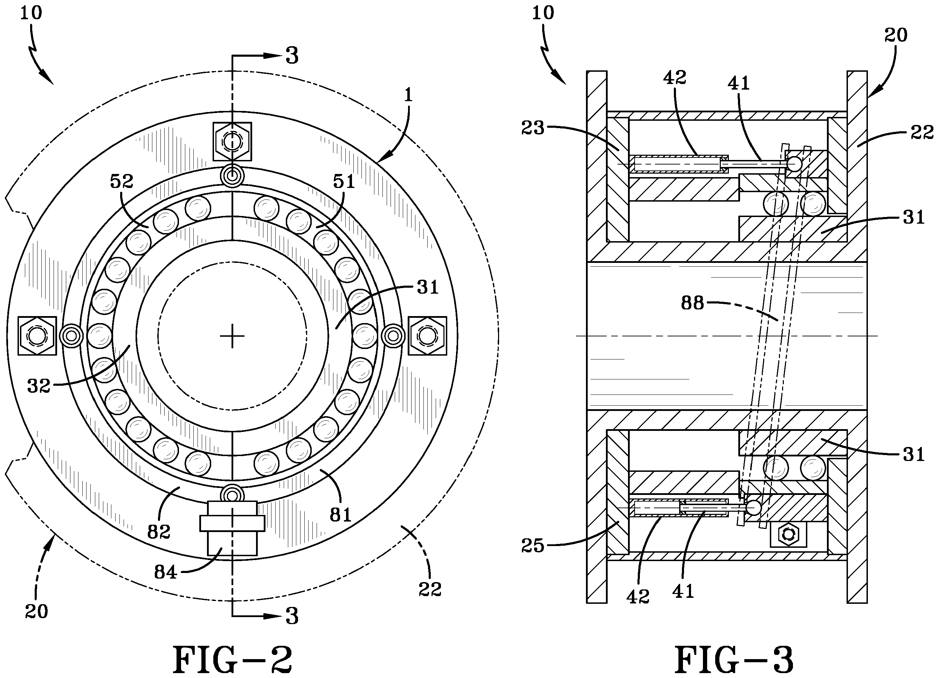

As shown in Figs. 1-3, an air maintenance assembly 10 in accordance with the present invention includes a rim assembly 20, a bearing assembly 50, and a cam pumping assembly 80. The rim assembly 20 preferably includes a first mounting plate 23 (upper in Fig. 3) secured to a rim 22, a diametrically opposed second mounting plate 25 (lower in Fig. 3) secured to the rim, a first inner ring 31 (or ring segment or portion) secured to the rim 22, a second inner ring 32 (or ring segment or portion) secured to the rim 22 and the first inner ring 31, a linear piston 41 and cylinder 42 secured to the rim 22 for pumping air into a tire cavity, (as described above) The bearing assembly 50 preferably includes a first semicircular track of bearings 51 and a second semicircular track of bearings 52 allowing the inner rings 31, 32 to rotate concentrically relative to stationary outer cam rings 81, 82 (or outer ring segments or portions). The cam assembly 80 preferably includes a first outer cam ring 81 (or ring segment or portion), a second outer cam ring 82 (or ring segment or portion) secured to the first cam ring 81, and a stationary weight 84 secured to the cam rings 81, 82 for maintaining the cam rings 81, 82 in a fixed circumferential position relative the ground when the rim assembly 20 rotates relative to the ground. A radially outer surface of the cam rings 81, 82 includes a cam groove 88 that is angled axially as it extends circumferentially around the cam rings. An outer operative end of the piston 41 engages the groove 88 such that as the rim assembly 20 rotates, the groove 88 translates the piston axially/linearly and reciprocatingly relative to the cylinder 42. The cylinder 42 thus provides compressed air with each revolution of the rim assembly 20 for maintaining the optimal air pressure within the tire cavity. As shown in Fig. 1, the inner ring has two semicircular inner ring portions or segments 31, 32 secured to each other, and the outer ring has two semicircular outer ring portions 81, 82 secured to each other.

## Claims

1. An air maintenance system for maintaining air in a vehicle tire or inflating a vehicle tire, the system comprising:
a rotatable axially inner ring (31, 32) secured to a vehicle wheel or rim (22);
a stationary axially outer ring (81, 82) maintaining a constant angular position relative to a ground surface;
a stationary mass (84) secured the stationary axially outer ring (81, 82);
a cylinder (42) secured to the rotatable axially inner ring (31, 32); and
a piston (41) secured to the cylinder (42) for a preferably linear motion relative to the cylinder (42) and the rotatable axially inner ring (31, 32);
wherein the system is configured such that the piston (41) is operatively reciprocating axially back and forth as determined by a cam groove (88) on an axially outer surface of the stationary axially outer ring (81, 82) for operatively engaging one end of the piston (41) such that the piston (41) and the cylinder (42) pump air into a tire cavity of a pneumatic tire mounted to the vehicle wheel or rim (22) when the vehicle wheel or rim (22) rotates relative to the ground.

2. The air maintenance system as set forth in claim 1 including a bearing assembly (50) having at least one track of bearings (51, 52) for causing the rotatable axially inner ring (31, 32) to rotate concentrically relative to the stationary axially outer ring (81, 82).

3. The air maintenance system as set forth in claim 1 or 2 wherein the rotatable axially inner ring (31, 32) is configured to rotate relative to the stationary mass (84).

4. The air maintenance system as set forth in at least one of the previous claims wherein relative diameters between the rotatable axially inner ring (31, 32) and the stationary axially outer ring are designed to collaborate to achieve a desired gear ratio and pumping speed.

5. The air maintenance system as set forth in at least one of the previous claims wherein the rotatable axially inner ring (31, 32) has a smooth bearing surface for the bearings (51, 52).

6. The air maintenance system as set forth in at least one of the previous claims wherein the stationary axially outer ring (81, 82) encircles the track of bearings (51, 52) and the rotatable axially inner ring (31, 32) and preferably applies an inward radial force against the bearings when assembled.

7. The air maintenance system as set forth in claim 6 wherein the inward radial force maintains the rotatable axially inner ring (31, 32) and the bearings (51, 52).

8. The air maintenance system as set forth in at least one of the previous claims wherein the rotatable axially inner ring (31, 32) has a substantially homogeneous weight distribution along the circumference of the rotatable axially inner ring (31, 32) such that no portion of the rotatable axially inner ring (31, 32) is substantially heavier than another portion.

9. The air maintenance system as set forth in at least one of the previous claims wherein the rotatable axially inner ring (31, 32) is substantially rigid and made of metal or wherein the rotatable axially inner ring (31, 32) is made of a rigid polymer.

10. The air maintenance system as set forth in at least one of the previous claims wherein the stationary mass (84) is configured to overcome inertia and friction generated by rotation of the rotatable axially inner ring (31, 32) and the rotating vehicle wheel or rim (22) such that the stationary mass (84) stays substantially static while the rotable axially inner ring (31, 32) rotates; and/or wherein the stationary mass (84) is configured to maintain its angular position relative to the ground surface as the vehicle wheel or rim (22) rotates and provides torque, generated by gravity, that opposes a rotation of the rotatable axially inner ring (31, 32) with the vehicle wheel or rim (22).

11. The air maintenance system as set forth in at least one of the previous claims wherein the stationary mass (84) is configured to prevent the stationary axially outer ring (81, 82) from rotating with the vehicle wheel or rim (22) and the rotatable axially inner ring (31, 32).

12. The air maintenance system as set forth in at least one of the previous claims wherein the stationary mass (84) is rectangular or spherical.

13. The air maintenance system as set forth in at least one of the previous claims wherein the rotatable axially inner ring (31, 32) includes two semicircular inner ring portions secured to each other; and/or wherein the stationary axially outer ring (81, 82) includes two semicircular outer ring portions secured to each other.

14. A method for maintaining optimal air pressure in a rotating pneumatic tire, the method comprising the steps of:
securing an axially inner ring (31, 32) to a vehicle wheel or rim (22);
rotating the vehicle wheel or rim (22);
maintaining an axially outer ring (81, 82) at a constant angular position relative to a ground surface by means of a stationary mass (84); and
preferably linearly reciprocating a piston (41) relative to a cylinder (42) secured to the vehicle wheel or rim (22) by means of a cam groove (88) on an outer surface of the axially outer ring (81, 82).

15. The method as set forth in claim 14 further including the step of concentrically rotating the axially inner ring (31, 32) relative to the axially outer ring (81, 82) by means of a ring shaped bearing assembly (50).
